# EUROPEAN PATENT SPECIFICATION

(11) **EP 2 614 417 B1**
(45) Date of publication and mention of the grant of the patent: **02.08.2017**
(21) Application number: 10752526.3
(22) Date of filing: 06.09.2010
(51) Int. Cl.: G06F 3/01, G01C 21/00

(54) **METHOD FOR OPERATING A DRIVER ASSISTANCE DEVICE, DRIVER ASSISTANCE DEVICE AND VEHICLE WITH A DRIVER ASSISTANCE DEVICE**
VERFAHREN FÜR DEN BETRIEB EINER FAHRERASSISTENZVORRICHTUNG, FAHRERASSISTENZVORRICHTUNG UND FAHRZEUG MIT EINER FAHRERASSISTENZVORRICHTUNG
PROCÉDÉ PERMETTANT DE FAIRE FONCTIONNER UN DISPOSITIF D'AIDE À LA CONDUITE, DISPOSITIF D'AIDE À LA CONDUITE ET VÉHICULE ÉQUIPÉ D'UN DISPOSITIF D'AIDE À LA CONDUITE

(43) Date of publication of application: 17.07.2013
(73) Proprietor: Valeo Schalter und Sensoren GmbH, 74321 Bietigheim-Bissingen (DE)
(72) Inventor: KUOCH, Siav Kuong, F-94100 Saint Maur des Fosses (FR); BONHOURE, Patrick, F-74100 Annemasse (FR)
(86) International application number: PCT/EP2010/005458
(87) International publication number: WO 2012/031606

(56) References cited:
- EP-A1- 1 840 522
- WO-A1-02/16875
- DE-A1-102007 039 669

## Description

The invention relates to a method for operating a driver assistance device comprising a mobile communication device. The invention also relates to a driver assistance device having a mobile communication device as well as to a vehicle having such a driver assistance device.

It is known from the prior art to use mobile devices in conjunction with navigation applications in order to support a driver while he is driving a vehicle. Such mobile devices usually use touch screens to provide an interface to the driver. The user has to identify where to touch the screen in order to cause specific information to be displayed or in order to navigate through a displayed menu. This kind of device operation is time consuming, forces the user to concentrate on the screen and distracts him from continuously watching the road.

EP1840522 A1 discloses a navigation device that has a display device, and a contactless sensor unit for determining a position of a finger of a user relative to the display device. The display of navigation information e.g. card clippings, is adjusted based on the determined position of the finger.

US 7,653,882 B2 discloses a method for representing menu buttons shown on a display and facilitating user navigation through a menu related to an optical storage medium. Each of the button states "normal", "selected" and "activated" looks different and is represented by an animation, image, image sequence or sound.

WO 2009/024112 A2 discloses a display device with an image surface and a proximity sensor system. The proximity sensor system can consist of multiple proximity sensors or a stereo camera and is designed to detect the relative position of a body part, e.g. a user's finger, to the image surface. Depending on the lateral position of the finger, a specific display area is selected. The closer the finger gets to this display area, the higher the magnification factor of the respective area becomes. Thus, a highly resolved and very specific position of the finger in three dimensional space can be recognized and used for contactless operation of the device.

An object of the present invention is to provide driver assistance means that can be operated easily and hardly distract a driver from safely running a vehicle.

This task according to the invention is solved by a method having the features according to patent claim 1, a driver assistance device having the features according to patent claim 14 and a vehicle having the features according to patent claim 15. Advantageous embodiments of the invention are the subject matter of the independent patent claims and the description.

The method, according to a first aspect of the invention, serves for operating a driver assistance device, which is specifically provided in a car, lorry, train or other kind of vehicle. The driver assistance device comprises a mobile communication device, e.g. a mobile phone, a PDA (personal digital assistant), a multimedia-enabled smartphone or the like. In particular, the mobile communication device can be separated from the vehicle or the driver assistance device and may be used independently. Also, the driver assistance device may be used independently of the mobile communication device. The mobile communication device itself comprises a display unit, which may be a monitor, LCD (liquid crystal display), touch screen, OLED (organic light-emitting diode) display or the like and which is designed to display information, e.g. text, images, movies, symbols, drawings etc. Furthermore, the mobile communication device also comprises a capture sensor, which operates without requiring physical contact to the object which is to be detected. The mobile communication device is operated at least partly contactless by means of an actuating element in case of the actuating element being present in the capture range of the capture sensor.

The actuating element may be a body part or a certain device, such as a pen specifically designed for the mobile communication device. Preferably, the actuating element is a hand. In particular, the capture sensor is designed to detect the presence of the actuating element within the capture range of the capture sensor. Thus, it can determine at least whether an object is present within the capture range or not. Alternatively or additionally it can also be designed to capture a specific characteristic of the actuating element, such as a shape, colour, texture etc. Furthermore, also a movement of the actuating element may be recognized by the capture sensor. In this preferred embodiment, the capture sensor may be able to determine the moving direction, speed, acceleration etc. of the actuating element, preferably of a hand.

According to the invention, depending on the detected presence and/or character and/or motion of the actuating element, an information supporting the driver in driving the vehicle is displayed on the display unit of the mobile communication device. The displayed information relates to information provided by the driver assistance device and thus specifically concerns content that supports the driver in driving his vehicle. For instance, information relating to the state of the vehicle (e.g. speed, motor temperature), the present location (e.g. global position of the vehicle, kind of road, road signs, objects of interest) or the vehicle's surrounding (e.g. images captured by cameras attached to the vehicle) may be displayed. Information for sole entertainment purposes or purposes not relating to driver assistance may not be considered encompassed here.

A driver can for example use a conventional mobile phone together with other components of a driver assistance device and thus easily create a fully functioning driver assistance device. This driver assistance device can then be operated - at least to some extent - in such a way that the user is not required to touch the mobile communication device. Thus, the method according to the invention allows a driver to operate the driver assistance device in a secure way by not having to search for specific buttons or display portions (like in case of a touch screen device) that have to be touched in order to trigger a certain function. The driver may use simple gestures or motions in front of the capture sensor to operate the driver assistance device. Thus, he may not have to look at the mobile communication device while operating it. He can concentrate on the road without being distracted. Consequently, the invention enhances driving security. Furthermore, contactless operation according to the invention is very convenient and intuitive.

In one embodiment, in dependency on the presence of the actuating element within the capture range of the capture sensor and/or on a characteristic of the actuating element and/or on a movement of the actuating element the size setting of a representation on the display unit is changed. For instance, the display may show a certain frame with image content on a subsection of the display unit. Thus, the image content of the frame is not displayed on the whole area of the display unit. By moving an actuating element into the capture range of the capture sensor, the user may operate the mobile communication device such that the size of the frame with the image content may change. In particular, just the size of the frame itself may change with the size of the image content staying constant. Alternatively, also the size of the image content may scale with the size of the expanding or shrinking frame. In the latter case, a zoom function for the image content is realized. The size setting may be chosen by the specific movement of the actuating element. For example, the longer the actuating element is moved within the capture range of the capture sensor, the higher the zoom factor may be. By way of moving the actuating element from left to right the representation may expand, while a right to left motion of the actuating element may shrink the representation on the display unit. The size setting may change stepwise or continuously. Usually, choosing a size setting is a complicated operation. The user, for example, has to choose a specific percentage value in a drop down menu to get the correct size of the representation. Also magnifying glass functionalities are known in the prior art, which are often difficult to execute on a touch screen mobile communication device. According to the embodiment, size settings can be chosen easily and without performing many different operations. No demanding movements have to be performed on a touch screen area. The size setting is simply chosen by the presence and/or the character and/or the motion of the actuating element in front of the capture sensor. The driver can perform a complicated task on the mobile communication device even without having to look at it.

Preferentially, the number of display portions on the display unit is changed in dependency on the presence of the actuating element within the capture range of the capture sensor and/or on a characteristic of the actuating element and/or on a movement of the actuating element. A display portion is a specific subsection of the display area of the display unit. Each display portion may show information relating to a specific driver assistance functionality. For instance, a first display portion may show a road map and a second display portion may show an image presently acquired by a camera of the vehicle. According to the embodiment, a specific display portion may be chosen by the contactless operation of the mobile communication device. The user may, for instance, move the actuating element into the capture range of the capture sensor and by doing so change the displayed content such that solely the first display portion is being displayed. The number of display portions is thus reduced from two to one. Also, the size of the first display portion may change. Specifically, if only one display portion is displayed, its area may fill the whole area of the display unit. Another movement of the actuating element into the capture range of the capture sensor may change the number of display portions back to two. The added area of all displayed display portions may give the full area of the display unit, but it may also be smaller. On a conventional mobile communication device with a touch screen, the user would choose a display portion by touching it. Thus, he has to concentrate and sensitively guide the motion of his finger to the respective area. With the aforementioned embodiment, making a choice concerning the number of display portions is much easier, as no direct touching of the mobile communication device is required. The user can concentrate on the traffic and on the information displayed on the display unit without having to perform complicated operation tasks.

Closely connected with this embodiment is an embodiment according to which the information displayed on the display unit is changed in dependency on the presence of the actuating element within the capture range of the capture sensor and/or on a characteristic of the actuating element and/or on a movement of the actuating element. Again, the displayed information can comprise text, images, symbols, photos, movies and the like. Specifically, a first displayed information relates to a first driver assisting content, e.g. an information about a speed limit, and a second displayed information relates to a second driver assisting content, e.g. an information about a present motor temperature. The driver can easily switch between the displayed contents by way of moving the actuating element into the capture range of the capture sensor. In particular, there may be a specific number N of information contents to be displayed. With each operation triggering action of the user, the information displayed switches form one information content to the next. After N operation triggering steps have been performed, the starting information content may be displayed again. Thus, a very simple and intuitive means of navigating through information is provided.

Advantageously, in dependency on the presence of the actuating element within the capture range of the capture sensor and/or on a characteristic of the actuating element and/or on a movement of the actuating element images are displayed on the display unit, which are currently being acquired by a camera. The camera is part of the driver assistance device, in particular a backup camera and/or front camera. The backup camera is typically attached to the back of the vehicle and acquires images in the direction opposite to the usual driving direction. It may widen the driver's field of view while driving in reverse, e.g. while parking a vehicle. The front camera typically monitors the area in front of the vehicle. The camera can also be part of the mobile communication device. It may be a digital camera, e.g. a CCD or CMOS camera. In particular, by way of contactless interaction with the mobile communication device, the driver may switch from images provided by the backup camera to images provided by the front camera and vice versa. Especially while parking a vehicle, a driver may want to switch very often between a front and back view on the display unit. Having to touch the device may be a tedious task. The way of operation provided by the embodiment provides higher convenience and makes the process of parking a vehicle safer.

In one embodiment, in dependency on the presence of the actuating element within the capture range of the capture sensor and/or on a characteristic of the actuating element and/or on a movement of the actuating element a map and/or map data attributes are displayed on the display unit. Specifically, the map may be a digital map, e.g. a road map provided on data storage means within a computing device. A map data attribute may namely be an information about the number of lanes, road signs, the kind of road etc. at the respective spatial position of the vehicle. In particular, the present position of the vehicle may be detected by adequate sensor means, e.g. a GPS (global positioning system) sensor, and also be displayed on the map. Thus, by way of contactless interaction, a driver can easily switch from a conventional navigation map to another information being displayed on the display unit that supports him while driving. When switching from one function to another, the original function can be kept in the background. The functions can run in parallel. Particularly, the navigation map can be kept in the background when switching to another information being displayed on the display. An indicator for the navigation function may still be presented to the user.

In one embodiment, in dependency on the presence of the actuating element within the capture range of the capture sensor and/or on a characteristic of the actuating element and/or on a movement of the actuating element, information relating to a specific object can be displayed on the display unit. The object is identified as such by adequate image recognition means. Such an object may be a road sign giving a speed limit. The driver assistance device may detect the road sign with a front camera, e.g. a camera built into the mobile communication device, and an image recognition software of the driver assistance device may recognize the speed limit written on the road sign. This speed limit may then be shown on the display unit. If, for instance, the driver does not know the present speed limit on a road, he may just have to move the actuating element in a specific fashion in front of the mobile communication device and the current speed limit is shown to him. Driving safety is thus highly improved. The speed limit algorithm may run in the background and a thumbnail of the detected traffic sign can be displayed in the current view during a certain period of time informing the user.

Preferentially, the mobile communication device has a basic setting, in which at least two display portions are displayed on the display unit. Each display portion represents a specific driver assistance information option; i.e. choosing a certain display portion leads to a certain information (assisting the driver in driving a vehicle) to be shown on the display unit. In dependency on the presence of the actuating element within the capture range of the capture sensor and/or on a characteristic of the actuating element and/or on a movement of the actuating element one of the driver assistance information options is either selected (i.e. chosen) and/or shifted (i.e. a certain order or sequence is changed) and/or blanked (i.e. not shown any longer). In particular, the basic setting may be a menu shown on the display unit. Each menu entry is then shown on a separate display portion and connected with a certain functionality, thus representing a driver assistance information option. By operating the mobile communication device in the described fashion, the user can now select one of the menu entries and by doing so achieve that the respective functionality is performed (i.e. the information connected with the menu entry is shown on the display unit). Alternatively or additionally, the user can cause certain menu entries to vanish (i.e. not to be displayed any longer) or he can change the order of the entries within the menu. By way of contactless interaction it is very convenient for a user to navigate through a menu. At the same time he can concentrate on the more important driving tasks.

Advantageously, the capture sensor is a proximity sensor. In a simple embodiment, the proximity sensor can only distinguish between the two states "actuating element being present within the capture range" and "actuating element not being present within the capture range". Alternatively, the proximity sensor can also detect, for example, a distance to the actuating element, a speed of the actuating element and the like. The proximity sensor may work optically, e.g. by detecting infrared radiation of a body part. The capture sensor may also be a more sophisticated optical sensor, such as an ambient light sensor or a camera. The ambient light sensor may detect shadows created by the actuating element and provide according electrical signals. The camera may specifically be a digital camera, e.g. a CCD or CMOS camera. The camera may be designed to recognize the colour, texture or form of the actuating element. If the actuating element is a body part, it may also be able to recognize gestures. In particular, the capture sensor is given by sensors which are standard parts of a mobile communication device but which are used for different purposes. For example, a camera, usually used for making photos with the mobile communication device, is used as a capture sensor for operating the driver assistance device. Alternatively, a proximity sensor is usually used in a mobile communication device to switch off the display unit if a user wants to telephone and is holding the mobile communication device to his ear. Now, the proximity sensor is used to operate the driver assistance device. Thus, no additional sensors are required and the price of the driver assistance device is kept low. No new sensor techniques have to be provided but established sensors are used. Redundancy is effectively avoided.

Preferentially, the method does not require artificial actuating elements. Instead, the operation is performed by means of a part of the body of the driver, in particular a hand or hand component, such as a finger. In this embodiment, the driver does not have to handle a specific actuating element provided with the driver assistance device. This aspect further simplifies operation. When wanting to operate the driver assistance device, the driver does not have to pick up a certain stick or other object in order to do so. Also the overall cost of the driver assistance device is kept low. The driver is not distracted by handling an artificial actuating element.

In one embodiment, the spatial orientation of the mobile communication device is detected by an orientation recognition sensor built into the mobile communication device. In particular, the orientation recognition sensor can be an accelerometer (g-sensor) or any other form of device that allows to detect absolute or relative spatial orientation of the mobile communication device. In dependency on the captured orientation a specific display, representation, image content, information or the like is shown on the display unit. In particular, the information to be displayed on the display unit is automatically changed depending on the respective orientation of the mobile communication device. Specifically, information concerning contents assisting the driver in driving the vehicle is shown. Advantageously, in an initial orientation of the mobile communication device a first representation is shown on the display unit. The initial orientation may be given by a portrait view of the display unit, while the further orientation may be given by a landscape view of the display unit. In particular, in the initial orientation, a basic representation for a navigation mode of the mobile communication device is displayed. The mobile communication device may have many different modes, such as a "telephone mode", an "internet mode" or an "entertainment mode". When connected to a vehicle's driver assistance device and thus becoming part of the driver assistance device, an initial display on the display unit characterizing a "navigation mode" may be shown. This initial display may be a menu with several menu entries, each menu entry representing a specific functionality assisting the driver in driving the vehicle. In a further orientation of the mobile communication device (recognized by the orientation recognition sensor) that differs from the initial orientation, specific information may be displayed that supports the driver Such information may be content connected to one of the menu entries of the menu shown in the initial orientation. In particular the information may comprise images acquired by a camera of the driver assistance device, e.g. a backup or front camera. The camera may also be part of the mobile communication device itself. Advantageously, the further orientation emerges form the initial orientation by a rotation about an axis which is perpendicular to the display unit and may preferentially be located in a middle position on display unit. In the latter case, the display unit and/or the mobile communication device may rotate approximately about its center of gravity. A rotation of about 90° is preferred.

In addition to the simple and convenient operation of the mobile communication device via the capture sensor, this embodiment offers another means of operation that requires little attention from the user. In the initial orientation the user may have the option to operate the mobile communication device with the actuating element by making use of the capture sensor, for example by choosing a menu entry in the basic menu shown on the display unit. If the user wants to switch to a camera attached to the vehicle, for example when going in reverse, he can simply rotate the mobile communication device and the information shown on the display unit is automatically adjusted, i.e. the image captured by the camera is now displayed. This way, operation is highly convenient for the driver as no demanding haptic procedures are required.

In one embodiment the mobile communication device also comprises a satellite signal sensor, e.g. a GPS sensor. With the satellite signal sensor the present spatial position of the mobile communication device can be determined. Depending on this position a specific information supporting the driver in driving the vehicle can be displayed on the display unit. Such information in particular encompasses images which are currently acquired by a camera that is part of the driver assistance device. Depending on the detected spatial position the mobile communication device may switch from a first displayed information (which in particular does not directly relate to content assisting the driver in driving the vehicle, e.g. a displayed menu) automatically to a second displayed information, the second information being provided by the driver assistance device and supporting the driver in driving the vehicle. It is also possible that depending on the detected present position the mobile communication device automatically switches from a first information to a second information being displayed. Both, first and second information, may then relate to content supporting the driver in driving the vehicle and may be provided by the driver assistance device. Specifically, the first and second information may comprise images acquired by different cameras of the driver assistance device. With this embodiment no specific action of the user is necessary. A desired camera view is automatically displayed solely depending on the present global position of the vehicle. This way, the driver can get current and important information without having to interact with the driver assistance device.

A driver assistance device according to the invention comprises a mobile communication device. The mobile communication device itself comprises a display unit and a capture sensor that is operating in a contactless fashion. When an actuating element is present within the capture range of the capture sensor, this actuating element can operate the mobile communication device without having to get into physical contact with it. However, the mobile communication device or only certain functionalities of the mobile communication device may additionally or solely be operable without the actuating element. In dependency on the presence of the actuating element within the capture range and/or on a characteristic of the actuating element and/or on a movement of the actuating element an information of the driver assistance device supporting the driver in driving the vehicle is displayable on the display unit.

A vehicle according to the invention comprises a driver assistance device according to the invention.

The preferable embodiments and their advantages presented with reference to the method for operating a driver assistance device according to the first aspect of the invention correspondingly apply to the driver assistance device according to the first aspect of the invention and the vehicle according to the first aspect of the invention.

A second aspect of the invention relates to a method for operating a driver assistance device comprising a mobile communication device having a display unit and an orientation recognition sensor designed to capture the spatial orientation of the mobile communication device, wherein in an initial orientation of the mobile communication device initial information is displayed on the display unit and in a further orientation of the mobile communication device that is different from its initial orientation an information provided by the driver assistance device and supporting the driver in driving the vehicle is displayed on the display unit.

In particular different orientations of the mobile communication device are set by way of rotation, preferably a rotation by 90°, about an axis which is perpendicular to the display unit.

In particular the information of the driver assistance device supporting the driver in driving the vehicle is provided by images currently recorded by a camera of the driver assistance device.

In particular the initial information is a basic representation, in particular a main menu, for a navigation mode of the mobile communication device.

The second aspect of the invention also relates to a driver assistance device having a mobile communication device comprising a display unit and an orientation recognition sensor designed to capture the spatial orientation of the mobile communication device, wherein in an initial orientation of the mobile communication device initial information is displayable on the display unit and in a further orientation of the mobile communication device that is different from its initial orientation an information provided by the driver assistance device and supporting the driver in driving the vehicle is displayable on the display unit.

The second aspect of the invention also relates to a vehicle with a driver assistance device according to the second aspect of the invention.

The preferable embodiments and their advantages presented with reference to the method for operating a driver assistance device according to the second aspect of the invention correspondingly apply to the driver assistance device according to the second aspect of the invention and the vehicle according to the second aspect of the invention.

Embodiments of the first aspect of the invention are also to be considered advantageous embodiments of the second aspect of the invention.

Further features of the invention derive from the claims, the figures, and the description of the figures. All features and feature combinations previously mentioned in the description as well as the features and feature combinations mentioned further along in the description of the figures and/or shown solely in the figures are not only usable in the combination indicated in each case, but also in different combinations or on their own.

The invention is now explained in more detail with reference to individual preferred embodiments and with reference to the attached drawings. These show in:
- Fig. 1: a schematic view of a car with a driver assistance device according to an embodiment of the invention;
- Fig. 2: a schematic view of a mobile phone which is part of a driver assistance device according to an embodiment of the invention;
- Fig. 3A: a schematic view of a mobile phone with three menu options being displayed on the display unit;
- Figs. 3B-3F: schematic representations of the working principle of a user switching between different information being displayed on the mobile phone by means of contactless interaction; and
- Figs. 4A-4B: schematic views of a mobile phone in an initial orientation (Fig. 4A) and 90°-rotated orientation (Fig. 4B) with a camera image being displayed on the display unit in the rotated orientation.

In the figures same elements or elements of the same function are equipped with the same reference signs.

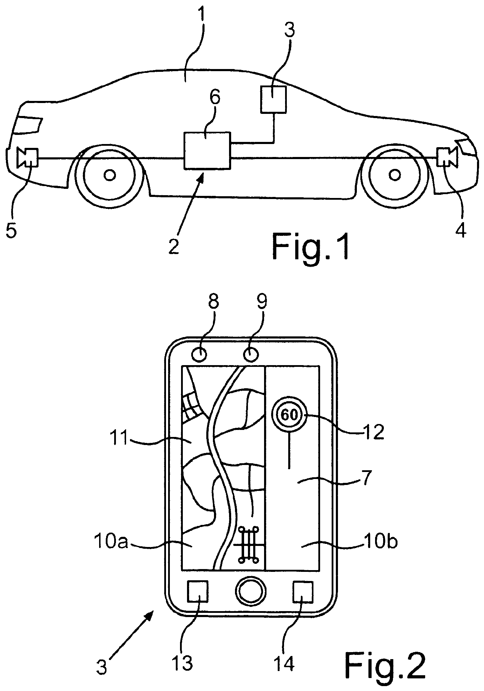

Fig. 1 shows a car 1 with a driver assistance device 2. The driver assistance device 2 comprises a front camera 4 monitoring a front area of the car 1 and a backup camera 5 monitoring an area behind the car 1. In the interior space of the car 1 a mobile phone 3 is held in place by a holder within the field of view of a driver. The mobile phone 3 is a mobile communication device and thus removable from the holder and car 1. When being placed inside the car 1 and properly connected to the other components of the driver assistance device 2 it becomes part of the driver assistance device 2. In the embodiment, the front camera 4, the backup camera 5 and the mobile phone 3 are electrically connected to a computing unit 6, which forms the functional core of the driver assistance device 2. The connection can also be realized by wireless means. For example, the link between the mobile phone 3 and the cameras 4 and 5 can be given by a wireless connection. Alternatively, the computing unit 6 can also be part of the mobile phone 3. In the computing unit 6 signals received from the different components of the driver assistance device 2 are processed and properly prepared for display on the mobile phone 3.

Fig. 2 shows the mobile phone 3, which comprises a large display unit 7, which is a liquid crystal colour display. It can display all kind of information that is specifically provided in the form of symbols, text, images, menus, drawings and the like. In the embodiment of Fig. 2 the display unit 7 comprises two separate display portions 10a and 10b. On display portion 10a, which fills the left side of the display unit 7, a map 11 is presently displayed. The right hand area of display unit 7 forms the display portion 10b, on which map data attributes, such as a road sign 12, can be shown. The mobile phone 3 comprises a plurality of sensors, namely a proximity sensor 8, a camera 9, an orientation recognition sensor 13 and a GPS sensor 14. If the mobile phone 3 is not in a navigation mode but for example in a "telephone mode", the proximity sensor 8 can mainly be used to switch off the display unit 7 when a user gets a call and is holding the mobile phone 3 close to his head.

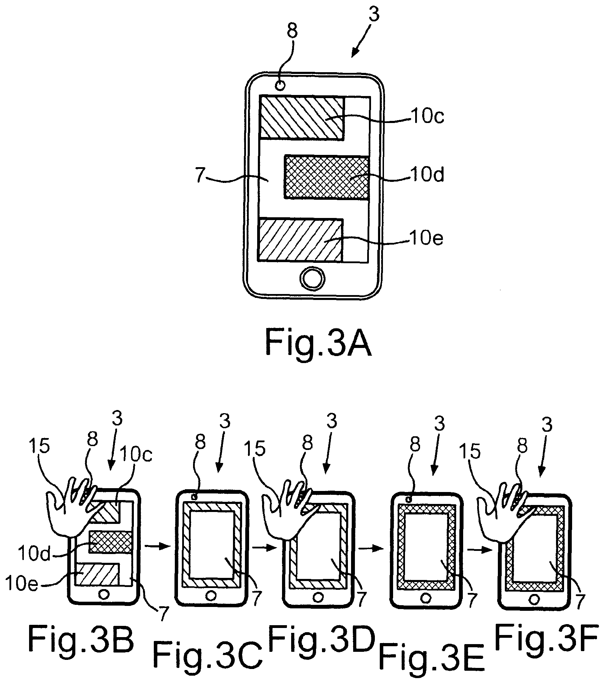

In Fig. 3A the mobile phone 3 is in a navigation mode as it is connected to the other components of the driver assistance device 2. A basic representation for this navigation mode is shown on the display unit 7. Specifically, a menu with three menu entries is being displayed. The individual menu entries do not fill the whole display unit 7 but are confined to three display portions 10c, 10d and 10e. Each menu entry represents a specific driving assistance function; i.e. choice of one of the menu entries leads to specific information being provided by the driver assistance device 2 and being displayed on the display unit 7. The respective information supports the driver in driving the car 1. Display portion 10c shows the menu entry "Speed limit". The menu entry may be displayed as a thumbnail representation of the respective driving assistance function. For example, the menu entry "Speed limit" may be displayed on the display portion 10c as a picture of a traffic sign currently being detected. Accordingly, display portions 10d and 10e show the menu entries "Map" and "Launch camera", respectively. The display unit 7 is a kind of dashboard showing an overview driver assistance information that can potentially be displayed on the display unit 7. In the shown embodiment, the display unit 7 is a touch screen display. Alternatively to the contactless operation mode described henceforth, the mobile phone 3 can also be operated "classically", i.e. by touching individual screen sections of the display unit 7 and thus triggering certain reactions. In the example, the display portions 10c-e can form such touch-sensitive sections and consequently form "buttons" for the displayed functionalities.

However, according to an embodiment of the invention, the interface is contactless and one possible way of operation is schematically shown in Figs. 3B-3F. In Fig. 3A the basic representation of the navigation mode is displayed on the display unit 7. The driver of the car 1 does not remember the current speed limit. He decides that he wants to get information from the driver assistance device 2 about the speed limit so that he does not drive too fast and endanger other users of the road. As traffic is heavy he has to fully concentrate on the road and can not afford to look at the display unit 7 for a very long time. As the road he is driving on is also very winding, he also does not want to remove one of his hands from the steering wheel for too long. He just shortly removes his right hand 15 from the steering wheel and waves it past the proximity sensor 8. The proximity sensor 8 recognizes the presence of the hand 15 and provides signals to the mobile phone 3. This way, the first menu entry "Speed limit" is chosen and on the full area of the display unit 7 the current speed limit is shown (Fig. 3C). The driver quickly glances at the display unit 7 and thus gets to know about the current speed limit. He did not have to touch the mobile phone 3 and navigate through the menu by continuously watching the display unit 7. Consequently, he is not distracted from safely driving his car 1. The speed limit displayed in Fig. 3C is information provided by the driver assistance device 2 and derived from map data attributes connected with a digital map saved on a storage device in the computing unit 6.

By waving his hand 15 once more within the capture range of the proximity sensor 8 (Fig. 3D), the driver causes the mobile phone 3 to switch to the next menu entry "Map", formerly shown on display portion 10d (see Figs. 3A, 3B). Consequently, a full screen view of a digital map is displayed on the display unit 7 (Fig. 3E), which provides information about bends ahead of the car. This information supports the driver in safely driving his car 1 as he knows in advance which bends and what road condition to expect. Another waving of the hand 15 (Fig. 3F) causes the next information content expected from the menu to be displayed on the display unit 7.

In sum, the driver can easily switch between full screen views and dashboard views on the display unit 7 by simply passing his hand in front of the proximity sensor 8. Choices can be made without the necessity of watching or touching the display unit 7. In Figs. 3A-3F a specific representation for the dashboard view and the full screen views is chosen. For instance, display portions 10c and 10d are hatched and cross-hatched, respectively. The patterns symbolize different driver assistance information options assigned to the different display portions. In Figs. 3C-3F specific image content connected to the respective driver assistance information option is symbolized by a frame with the corresponding pattern. For instance, display portion 10d is assigned to the menu entry "Map", which is a driver assistance information option and which is symbolized by the cross-hatched pattern. Choice of this menu entry leads to a map, e.g. the map 11, to be displayed on the display unit 7 of Fig. 3E. An actual map- the image content-symbolized by the cross-hatched frame in Fig. 3E is assigned to the (abstract) driver assistance information option "Map", symbolized by the cross-hatched display portion 10d. After a certain period of time or after a specific user interaction, the mobile phone 3 may automatically switch back into the dashboard view state.

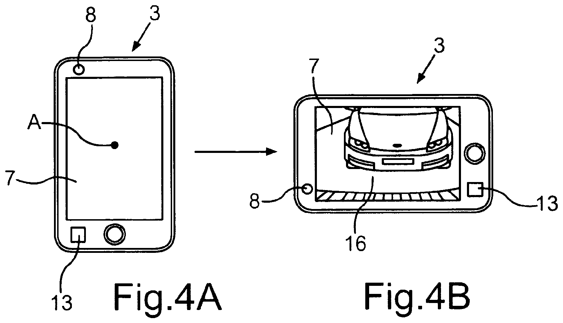

Additionally to the proximity sensor 8, the mobile phone 3 according to Fig. 4A also comprises an orientation recognition sensor 13. Fig. 4A shows the mobile phone 3 in a vertical orientation with the display unit 7 offering a portrait view of the displayed contents.

The display unit 7 of Fig. 4A may again show a menu like in Fig. 3A or a map 11 and map data attributes like in Fig. 2. The driver decides to park his car 1 and needs assistance by the driver assistance device 2 during the parking procedure. He drives the car 1 in reverse direction but can not properly see the parked car behind him. That is why he wants to see the images 16 continuously captured by the backup camera 5 on the display unit 7. As traffic is heavy and he wants to park his car quickly in order not to provoke an accident, he has no time for long interaction with the mobile phone 3. The embodiment of Figs. 4A and 4B allows the driver to quickly get the desired view on the display unit 7 by simply rotating the mobile phone 3. For this purpose, the mobile phone 3 is fixed inside the car 1 such that it can freely be rotated about an axis A. The driver rotates the mobile phone 3 by 90° counter clockwise and the orientation recognition sensor 13 detects the changed orientation. Based on the signals provided by the orientation recognition sensor 13, the driver assistance device 2 causes the backup camera images 16 to be automatically displayed on the display unit 7, which is now in a landscape mode (Fig. 4B). Having finished parking his car 1, the driver rotates the mobile phone 3 back from the horizontal position of Fig. 4B to the vertical position of Fig. 4A. The original kind of information of Fig. 4A is automatically displayed again on the display unit 7. A 90° rotation can either be performed clockwise or counterclockwise. For example, one can change for the backup camera 5 for the two rotations. Alternatively, one can select the front camera 4 by clockwise rotation and the backup camera 5 by counterclockwise rotation.

## Claims

1. A method for operating a driver assistance device (2) comprising a mobile communication device (3) having a display unit (7) and a contactless operating capture sensor (8, 9), wherein the mobile communication device (3) is operated at least partly contactless by means of an actuating element (15), when the actuating element (15) is positioned within the capture range of the capture sensor (8, 9), and an information (11, 12, 16) of the driver assistance device (2) supporting the driver in driving a vehicle (1) is displayed on the display unit (7), whereby in dependency on the presence of the actuating element (15) within the capture range of the capture sensor (8,9) and/or on a characteristic of the actuating element (15) and/or on a movement of the actuating element (15) captured by sensor (8,9), images (16) currently acquired by a camera (4, 5) of the driver assistance device (2), the camera being attached to the vehicle, in particular a backup camera (5) and/or a front camera (4), are displayed on the display unit (7).

2. The method according to claim 1, wherein in dependency on the presence of the actuating element (15) within the capture range of the capture sensor (8, 9) and/or on a characteristic of the actuating element (15) and/or on a movement of the actuating element (15) the size setting of a representation (10a-10e, 11, 12, 16) on the display unit (7) is changed.

3. The method according to claim 1 or 2, wherein in dependency on the presence of the actuating element (15) within the capture range of the capture sensor (8, 9) and/or on a characteristic of the actuating element (15) and/or on a movement of the actuating element (15) the number of display portions (10a-10e) on the display unit (7) is changed.

4. The method according to any one of the preceding claims, wherein in dependency on the presence of the actuating element (15) within the capture range of the capture sensor (8, 9) and/or on a characteristic of the actuating element (15) and/or on a movement of the actuating element (15) the information (10a-10e, 11, 12, 16) displayed on the display unit (7) is changed.

5. The method according to any one of the preceding claims, wherein in dependency on the presence of the actuating element (15) within the capture range of the capture sensor (7) and/or on a characteristic of the actuating element (15) and/or on a movement of the actuating element (15) a map (11) and/or map data attributes (12) are displayed on the display unit (7).

6. The method according to any one of the preceding claims, wherein in dependency on the presence of the actuating element (15) within the capture range of the capture sensor (7) and/or on a characteristic of the actuating element (15) and/or on a movement of the actuating element (15) an information (12) is displayed on the display unit (7) that is assigned to an object that is captured via an image recognition (4, 6).

7. The method according to any one of the preceding claims, wherein in a basic setting at least two display portions (10c-10e) with one assigned driver assistance information option each are displayed on the display unit (7), and in dependency on the presence of the actuating element (15) within the capture range of the capture sensor (7) and/or on a characteristic of the actuating element (15) and/or on a movement of the actuating element (15) one of the driver assistance information options (10c-10e) is selected and/or shifted and/or blanked.

8. The method according to any one of the preceding claims, wherein the capture sensor is provided in the form of a proximity sensor (8) and/or an optical sensor, in particular an ambient light sensor and/or a camera (9).

9. The method according to any one of the preceding claims, wherein the operation is performed by means of a part of the body of the driver, in particular a hand (15), as the only actuating element.

10. The method according to any one of the preceding claims, wherein a spatial orientation of the mobile communication device (3) is captured by means of an orientation recognition sensor (13) provided in the mobile communication device (3), and in dependency on the captured orientation a specific display (10c-10e) is effected on the display unit (7), in particular the information to be displayed is automatically changed, and in dependency on the orientation different information (16) is displayed.

11. The method according to claim 10, wherein in an initial orientation of the mobile communication device (3) a first representation (10c-10e), in particular a basic representation for a navigation mode of the mobile communication device (3), is displayed on the display unit (7), and in a further orientation of the mobile communication device (3) that differs from its initial orientation information (16) of the driver assistance device (2) supporting the driver in driving the vehicle (1), in particular images (16) currently acquired by a camera (4, 5, 9) of the driver assistance device (2), is displayed on the display unit (7), wherein in particular the further orientation emerges from the initial orientation by way of rotation, preferably a rotation by 90°, about an axis (A) which is perpendicular to the display unit (7).

12. A method according to any one of the preceding claims, wherein a position of the mobile communication device (3) is determined by means of a satellite signal sensor (14) provided in the mobile communication device (3) and in dependency on the position information (11, 12, 16) supporting the driver in driving the vehicle, in particular images (16) currently acquired by a camera (4, 5, 9), is displayed on the display unit (7).

13. A driver assistance device (2) having a mobile communication device (3) comprising a display unit (7) and a contactless operating capture sensor (8, 9), wherein the mobile communication device (3) is at least partly contactless operable by means of an actuating element (15), when the actuating element (15) is present within the capture range of the capture sensor (8, 9), and an information (11, 12, 16) of the driver assistance device (2) supporting the driver in driving the vehicle (1) is displayable on the display unit (7), the driver assistance device further configured such that in dependency of the presence of the actuating element within the capture range of the capture sensor and/or on a characteristic of the actuating element and/or on a movement of the actuating element captured by sensor (8, 9), images currently acquired by a camera (4, 5) of the driver assistance device, the camera being attached to the vehicle, in particular a backup camera (5) and/or a front camera (4), are displayed on the display unit.

14. A vehicle (1) comprising a driver assistance device (2) according to claim 13.

## Patentansprüche

1. Verfahren zum Bedienen einer Fahrerassistenzvorrichtung (2), umfassend eine Mobilkommunikationsvorrichtung (3) mit einer Anzeigeeinheit (7) und einem kontaktlosen Bedienungserfassungssensor (8, 9), wobei die Mobilkommunikationsvorrichtung (3) mindestens teilweise kontaktlos mittels eines Betätigungselements (15) bedient wird, wenn das Betätigungselement (15) innerhalb des Erfassungsbereichs des Erfassungssensors (8, 9) positioniert wird, und wobei eine Information (11, 12, 16) der Fahrerassistenzvorrichtung (2), die den Fahrer beim Fahren eines Fahrzeugs (1) unterstützt, auf der Anzeigeeinheit (7) angezeigt wird, wobei in Abhängigkeit von dem Vorhandensein des Betätigungselements (15) innerhalb des Erfassungsbereichs des Erfassungssensors (8, 9) und/oder von einem Charakteristikum des Betätigungselements (15) und/oder von einer Bewegung des Betätigungselements (15), erfasst durch den Sensor (8, 9), Bilder (16), die gegenwärtig durch eine Kamera (4, 5) der Fahrerassistenzvorrichtung (2) aufgenommen werden, wobei die Kamera an dem Fahrzeug angebracht ist, insbesondere eine Rückfahrkamera (5) und/oder eine vordere Kamera (4), auf der Anzeigeeinheit (7) angezeigt werden.

2. Verfahren nach Anspruch 1,
wobei in Abhängigkeit von dem Vorhandensein des Betätigungselements (15) innerhalb des Erfassungsbereichs des Erfassungssensors (8, 9) und/oder von einem Charakteristikum des Betätigungselements (15) und/oder von einer Bewegung des Betätigungselements (15) die Größeneinstellung einer Repräsentation (10a-10e, 11, 12, 16) auf der Anzeigeeinheit (7) geändert wird.

3. Verfahren nach Anspruch 1 oder 2,
wobei in Abhängigkeit von dem Vorhandensein des Betätigungselements (15) innerhalb des Erfassungsbereichs des Erfassungssensors (8, 9) und/oder von einem Charakteristikum des Betätigungselements (15) und/oder von einer Bewegung des Betätigungselements (15) die Anzahl der Anzeigeabschnitte (10a-10e) auf der Anzeigeeinheit (7) geändert wird.

4. Verfahren nach einem der vorstehenden Ansprüche,
wobei in Abhängigkeit von dem Vorhandensein des Betätigungselements (15) innerhalb des Erfassungsbereichs des Erfassungssensors (8, 9) und/oder von einem Charakteristikum des Betätigungselements (15) und/oder von einer Bewegung des Betätigungselements (15) die auf der Anzeigeeinheit (7) angezeigte Information (10a-10e, 11, 12, 16) geändert wird.

5. Verfahren nach einem der vorstehenden Ansprüche,
wobei in Abhängigkeit von dem Vorhandensein des Betätigungselements (15) innerhalb des Erfassungsbereichs des Erfassungssensors (7) und/oder von einem Charakteristikum des Betätigungselements (15) und/oder von einer Bewegung des Betätigungselements (15) eine Karte (11) und/oder Kartendatenattribute (12) auf der Anzeigeeinheit (7) angezeigt werden.

6. Verfahren nach einem der vorstehenden Ansprüche,
wobei in Abhängigkeit von dem Vorhandensein des Betätigungselements (15) innerhalb des Erfassungsbereichs des Erfassungssensors (7) und/oder von einem Charakteristikum des Betätigungselements (15) und/oder von einer Bewegung des Betätigungselements (15) eine Information (12) auf der Anzeigeeinheit (7) angezeigt wird, die einem Objekt zugeordnet wird, das über eine Bilderkennung (4, 6) erfasst wird.

7. Verfahren nach einem der vorstehenden Ansprüche,
wobei in einer Grundeinstellung mindestens zwei Anzeigeabschnitte (10c-10e) mit einer zugeordneten Fahrerassistenz-Informationsoption jeweils auf der Anzeigeeinheit (7) angezeigt werden und in Abhängigkeit von dem Vorhandensein des Betätigungselements (15) innerhalb des Erfassungsbereichs des Erfassungssensors (7) und/oder von einem Charakteristikum des Betätigungselements (15) und/oder von einer Bewegung des Betätigungselements (15) eine der Fahrerassistenz-Informationsoptionen (10c-10e) ausgewählt und/oder verlagert und/oder ausgeblendet wird.

8. Verfahren nach einem der vorstehenden Ansprüche,
wobei der Erfassungssensor in der Form eines Näherungssensors (8) und/oder eines optischen Sensors, insbesondere ein Umgebungslichtsensor und/oder eine Kamera (9), bereitgestellt wird.

9. Verfahren nach einem der vorstehenden Ansprüche,
wobei die Bedienung mittels eines Teils des Körpers des Fahrers, insbesondere eine Hand (15), als das einzige Betätigungselement durchgeführt wird.

10. Verfahren nach einem der vorstehenden Ansprüche,
wobei eine räumliche Ausrichtung der Mobilkommunikationsvorrichtung (3) mittels eines Ausrichtungserkennungssensors (13), bereitgestellt in der Mobilkommunikationsvorrichtung (3), erfasst wird und in Abhängigkeit von der erfassten Ausrichtung eine spezifische Anzeige (10c-10e) auf der Anzeigeeinheit (7) bewirkt wird, insbesondere die anzuzeigende Information automatisch geändert wird, und in Abhängigkeit von der Ausrichtung eine verschiedene Information (16) angezeigt wird.

11. Verfahren nach Anspruch 10,
wobei in einer anfänglichen Ausrichtung der Mobilkommunikationsvorrichtung (3) eine erste Repräsentation (10c-10e), insbesondere eine Grundrepräsentation für einen Navigationsmodus der Mobilkommunikationsvorrichtung (3), auf der Anzeigeeinheit (7) angezeigt wird und in einer weiteren Ausrichtung der Mobilkommunikationsvorrichtung (3), die von ihrer anfänglichen Ausrichtung verschieden ist, eine Information (16) der Fahrerassistenzvorrichtung (2), die den Fahrer beim Fahren des Fahrzeugs (1) unterstützt, insbesondere Bilder (16), gegenwärtig aufgenommen durch eine Kamera (4, 5, 9) der Fahrerassistenzvorrichtung (2), auf der Anzeigeeinheit (7) angezeigt wird, wobei die weitere Ausrichtung sich insbesondere aus der anfänglichen Ausrichtung mittels einer Drehung, vorzugsweise eine Drehung um 90°, um eine Achse (A), die zu der Anzeigeeinheit (7) senkrecht ist, ergibt.

12. Verfahren nach einem der vorstehenden Ansprüche,
wobei eine Position der Mobilkommunikationsvorrichtung (3) mittels eines Satellitensignalsensors (14), bereitgestellt in der Mobilkommunikationsvorrichtung (3), bestimmt wird und in Abhängigkeit von der Position eine Information (11, 12, 16), die den Fahrer beim Fahren des Fahrzeugs unterstützt, insbesondere gegenwärtig durch eine Kamera (4, 5, 9) erfasste Bilder (16), auf der Anzeigeeinheit (7) angezeigt wird.

13. Fahrerassistenzvorrichtung (2) mit einer Mobilkommunikationsvorrichtung (3), umfassend eine Anzeigeeinheit (7) und einen kontaktlosen Bedienungserfassungssensor (8, 9), wobei die Mobilkommunikationsvorrichtung (3) mindestens teilweise mittels eines Betätigungselements (15) kontaktlos bedienbar ist, wenn das Betätigungselement (15) innerhalb des Erfassungsbereichs des Erfassungssensors (8, 9) vorhanden ist, und eine Information (11, 12, 16) der Fahrerassistenzvorrichtung (2), die den Fahrer beim Fahren des Fahrzeugs (1) unterstützt, auf der Anzeigeeinheit (7) anzeigbar ist, wobei die Fahrerassistenzvorrichtung ferner derart konfiguriert ist, dass in Abhängigkeit von dem Vorhandensein des Betätigungselements innerhalb des Erfassungsbereichs des Erfassungssensors und/oder von einem Charakteristikum des Betätigungselements und/oder von einer Bewegung des Betätigungselements, erfasst durch den Sensor (8, 9), Bilder, die gegenwärtig durch eine Kamera (4, 5) der Fahrerassistenzvorrichtung aufgenommen werden, wobei die Kamera an dem Fahrzeug angebracht ist, insbesondere eine Rückfahrkamera (5) und/oder eine vordere Kamera (4), auf der Anzeigeeinheit angezeigt werden.

14. Fahrzeug (1), umfassend eine Fahrerassistenzvorrichtung (2) nach Anspruch 13.

## Revendications

1. Procédé permettant de faire fonctionner un dispositif d'aide à la conduite (2) comprenant un dispositif de communication mobile (3) doté d'une unité d'affichage (7) et d'un capteur de capture fonctionnant sans contact (8, 9), dans lequel le dispositif de communication mobile (3) fonctionne au moins en partie sans contact au moyen d'un élément actionneur (15) lorsque l'élément actionneur (15) est placé à portée de capture du capteur de capture (8, 9), et une information (11, 12, 16) du dispositif d'aide à la conduite (2) qui aide le conducteur à conduire un véhicule (1) s'affiche sur l'unité d'affichage (7), moyennant quoi, en fonction de la présence de l'élément actionneur (15) à portée de capture du capteur de capture (8, 9) et/ou d'une caractéristique de l'élément actionneur (15) et/ou d'un mouvement de l'élément actionneur (15) capturé par le capteur (8, 9), des images (16) en cours d'acquisition par une caméra (4, 5) du dispositif d'aide à la conduite (2), la caméra étant fixée au véhicule, plus particulièrement par une caméra de recul (5) et/ou une caméra frontale (4), s'affichent sur l'unité d'affichage (7).

2. Procédé selon la revendication 1, dans lequel
en fonction de la présence de l'élément actionneur (15) à portée de capture du capteur de capture (8, 9) et/ou d'une caractéristique de l'élément actionneur (15) et/ou d'un mouvement de l'élément actionneur (15), le réglage de la dimension d'une représentation (10a-10e, 11, 12, 16) sur l'unité d'affichage (7) est modifié.

3. Procédé selon la revendication 1 ou 2, dans lequel
en fonction de la présence de l'élément actionneur (15) à portée de capture du capteur de capture (8, 9) et/ou d'une caractéristique de l'élément actionneur (15) et/ou d'un mouvement de l'élément actionneur (15), le nombre de zones d'affichage (10a-10e) sur l'unité d'affichage (7) est modifié.

4. Procédé selon l'une quelconque des revendications précédentes, dans lequel
en fonction de la présence de l'élément actionneur (15) à portée de capture du capteur de capture (8, 9) et/ou d'une caractéristique de l'élément actionneur (15) et/ou d'un mouvement de l'élément actionneur (15), l'information (10a-10e, 11, 12, 16) affichée sur l'unité d'affichage (7) est modifiée.

5. Procédé selon l'une quelconque des revendications précédentes, dans lequel
en fonction de la présence de l'élément actionneur (15) à portée de capture du capteur de capture (7) et/ou d'une caractéristique de l'élément actionneur (15) et/ou d'un mouvement de l'élément actionneur (15), une carte (11) et/ou des attributs de données de carte (12) s'affichent sur l'unité d'affichage (7).

6. Procédé selon l'une quelconque des revendications précédentes, dans lequel
en fonction de la présence de l'élément actionneur (15) à portée de capture du capteur de capture (7) et/ou d'une caractéristique de l'élément actionneur (15) et/ou d'un mouvement de l'élément actionneur (15), une information (12) s'affiche sur l'unité d'affichage (7), cette information étant assignée à un objet qui est capturé par une reconnaissance d'image (4, 6).

7. Procédé selon l'une quelconque des revendications précédentes, dans lequel
dans un réglage de base, au moins deux zones d'affichage (10c-10e), avec une option d'information d'aide à la conduite assignée chacune, s'affichent sur l'unité d'affichage (7) et, en fonction de la présence de l'élément actionneur (15) à portée de capture du capteur de capture (7) et/ou d'une caractéristique de l'élément actionneur (15) et/ou d'un mouvement de l'élément actionneur (15), l'une des options d'information d'aide à la conduite (10c-10e) est sélectionnée et/ou décalée et/ou occultée.

8. Procédé selon l'une quelconque des revendications précédentes, dans lequel
le capteur de capture se présente sous la forme d'un capteur de proximité (8) et/ou d'un capteur optique, plus particulièrement d'un capteur de luminosité ambiante et/ou d'une caméra (9).

9. Procédé selon l'une quelconque des revendications précédentes, dans lequel
le fonctionnement s'effectue au moyen d'une partie du corps du conducteur, plus particulièrement d'une main (15), comme seul élément actionneur.

10. Procédé selon l'une quelconque des revendications précédentes, dans lequel
une orientation spatiale du dispositif de communication mobile (3) est capturée au moyen d'un capteur de reconnaissance d'orientation (13) contenu dans le dispositif de communication mobile (3) et, en fonction de l'orientation capturée, un affichage spécifique (10c-10e) s'effectue sur l'unité d'affichage (7), plus particulièrement l'information à afficher est automatiquement modifiée et, en fonction de l'orientation, une information différente (16) s'affiche.

11. Procédé selon la revendication 10, dans lequel
dans une orientation initiale du dispositif de communication mobile (3), une première représentation (10c-10e), plus particulièrement une représentation de base pour un mode de navigation du dispositif de communication mobile (3), s'affiche sur l'unité d'affichage (7) et, dans une orientation supplémentaire du dispositif de communication mobile (3) différente de son orientation initiale, une information (16) du dispositif d'aide à la conduite (2) qui aide le conducteur à conduire le véhicule (1), plus particulièrement des images (16) en cours d'acquisition par une caméra (4, 5, 9) du dispositif d'aide à la conduite (2), s'affiche sur l'unité d'affichage (7), l'orientation supplémentaire découlant plus particulièrement de l'orientation initiale par rotation, de préférence par rotation de 90°, autour d'un axe (A) qui est perpendiculaire à l'unité d'affichage (7).

12. Procédé selon l'une quelconque des revendications précédentes, dans lequel
une position du dispositif de communication mobile (3) est déterminée au moyen d'un capteur de signal satellite (14) contenu dans le dispositif de communication mobile (3) et, en fonction de la position, une information (11, 12, 16) qui aide le conducteur à conduire le véhicule, plus particulièrement des images (16) en cours d'acquisition par une caméra (4, 5, 9), s'affiche sur l'unité d'affichage (7).

13. Dispositif d'aide à la conduite (2) équipé d'un dispositif de communication mobile (3) comprenant une unité d'affichage (7) et un capteur de capture fonctionnant sans contact (8, 9), dans lequel le dispositif de communication mobile (3) fonctionne au moins en partie sans contact au moyen d'un élément actionneur (15) lorsque l'élément actionneur (15) est présent à portée de capture du capteur de capture (8, 9), et une information (11, 12, 16) du dispositif d'aide à la conduite (2) qui aide le conducteur à conduire un véhicule (1) peut s'afficher sur l'unité d'affichage (7), le dispositif d'aide à la conduite étant configuré en outre pour faire en sorte que, en fonction de la présence de l'élément actionneur à portée de capture du capteur de capture et/ou d'une caractéristique de l'élément actionneur et/ou d'un mouvement de l'élément actionneur capturé par le capteur (8, 9), des images en cours d'acquisition par une caméra (4, 5) du dispositif d'aide à la conduite, la caméra étant fixée au véhicule, plus particulièrement par une caméra de recul (5) et/ou une caméra frontale (4), s'affichent sur l'unité d'affichage.

14. Véhicule (1) comprenant un dispositif d'aide à la conduite (2) selon la revendication 13.
